# EUROPÄISCHE PATENTSCHRIFT

(11) **EP 2 242 688 B1**
(45) Veröffentlichungstag und Bekanntmachung des Hinweises auf die Patenterteilung: **10.08.2016**
(21) Anmeldenummer: 09706926.4
(22) Anmeldetag: 15.01.2009
(51) Int. Cl.: B64D 11/06, B60N 2/68, B60R 21/207

(54) **BEWEGLICHE BEFESTIGUNGSEINHEIT FÜR EIN SITZGESTELL IN EINEM FLUGZEUG**
MOVABLE FASTENING UNIT FOR A SEAT FRAME IN AN AIRCRAFT
ENSEMBLE DE FIXATION MOBILE POUR CHÂSSIS DE SIÈGE DANS UN AVION

(30) Priorität: 30.01.2008 DE 102008006695; 30.01.2008 US 62970
(43) Veröffentlichungstag der Anmeldung: 27.10.2010
(73) Patentinhaber: Airbus Operations GmbH, 21129 Hamburg (DE)
(72) Erfinder: EHLERS, Bernd, 20144 Hamburg (DE); HERZOG, Mark, 22885 Barsbüttel (DE); SCHMOCK, Stephan, 22359 Hamburg (DE)
(74) Vertreter: Kopf Westenberger Wachenhausen Patentanwälte PartG mbB
(86) Internationale Anmeldenummer: PCT/EP2009/050437
(87) Internationale Veröffentlichungsnummer: WO 2009/095309

(56) Entgegenhaltungen:
- WO-A-02/066284
- DE-A1-102004 019 299
- DE-A1-102004 058 204
- DE-C- 335 103
- DE-U1-202007 004 439
- FR-A- 800 118
- FR-A- 813 359
- US-A1- 2004 046 430

## Beschreibung

### Gebiet der Erfindung

Die Erfindung betrifft ein Flugzeug mit mehreren Sitzeinheiten, wobei die Sitzeinheiten bewegliche Befestigungseinheiten aufweisen, und ein Verfahren zum Verändern von Sitzabständen einer Bestuhlung in dem Flugzeug.

### Technischer Hintergrund

Bekannte Befestigungen für Sitze in Flugzeugen sind stets an die feste Montierung auf der Sitzschiene gebunden. Weiterhin ist es aufgrund des starren Sitzgestells nicht möglich, die Sitze in Flugzeuglängsrichtung (im folgenden x-Richtung genannt) zu verstellen, ohne diese Montierung zu lösen. Das kann beispielsweise aus Gründen des Aufwandes und der Zeit, die für eine Rekonfiguration der Sitze benötigt wird, dazu führen, dass Business Class (BC) Passagiere den gleichen Sitzabstand wie Passagiere in der Economy Class (EC) haben. Auf Langstreckenflügen gibt es in der Regel einen großen Unterschied im Sitzkomfort zwischen der BC und der EC.

Die Fluggesellschaften (Airlines) verwenden aber für kurze Zubringer-Flugstrecken auch Flugzeuge mit kleinem Durchmesser, so genannte single aisle (SA-) Flugzeuge.

Viele Flugzeuge der SA-Familie verfügen über eine variable BC. Dabei wird ein auf einer Schiene befestigter Vorhang in Flugzeuglängsrichtung verschoben und dient als Klassentrennung (Class divider). Er trennt die BC im vorderen Teil der Kabine von der EC im hinteren Teil der Kabine. Typischerweise bleibt in der BC der Mittelsitz einer dreier Sitzbank frei und es gibt eine bessere Verpflegung als in der EC. Damit ist der Sitzkomfort, besonders der Abstand zum Vordersitz quasi identisch zur EC.

Ist in diesen SA-Flugzeugen der Unterschied zwischen BC und EC beispielsweise sehr gering, so wird der Business Class Kunde mit einem großen Komfortunterschied zwischen diesen so genannten Feeder-Flügen und dem eigentlichen Flug in dem Langstreckenflugzeug innerhalb der gleichen Airline konfrontiert. Das Bedürfnis nach einer variabeln Klassentrennung, die direkt am Gate vom beispielsweise Kabinenpersonal durchgeführt werden kann, ist unter Anderem deshalb größer geworden.

WO 02/066284 A1 beschreibt einen Fluggastsitz mit mindestens einer in ihrer Neigung einstellbaren Sitzkomponente, wie einen Sitzteil, die mit ihrer Sitzrahmenstruktur über Ständerbeine verschwenkbar auf einer Bodenstruktur aufstellbar ist, wobei die Ständerbeine paarweise im Bereich der Sitzvorder- und der Sitzhinterkante des Sitzteils an diesem angreifen, mit einer Betätigungseinrichtung zum Einstellen der jeweiligen Neigung für das Sitzteil und mit einer Ausgangsposition, bei der das Sitzteil im Wesentlichen zur Bodenstruktur parallel ausgerichtet ist und keine Neigung aufweist.

DE 20 2007 004 439 U1 beschreibt eine Sitzvorrichtung mit einer Sitzbodenlagereinrichtung, die dazu vorgesehen ist, einen Sitzboden beweglich zu lagern, wobei die Sitzbodenlagereinrichtung wenigstens eine erste Lagereinheit mit zumindest einem Hebelgetriebe und wenigstens eine zweite Lagereinheit mit zumindest einer Kulisse aufweist.

DE 335 103 C beschreibt einen verstellbaren Sitz für Luftfahrzeuge, der an die Körperform und die persönlichen Wünsche der Fahrgäste angepasst werden kann, indem seine Sitzplatte gehoben oder gesenkt und die Vorderkante der Sitzplatte gegenüber dem Rumpf des Flugzeugs vor- oder zurückgeschoben werden kann. Der Sitz ist an einem im Rumpf drehbar gelagerten Stabsystem befestigt.

DE 10 2004 019 299 A1 beschreibt einen Fahrzeugsitz mit mindestens einer in ihrer Position einstellbaren Sitzkomponente, wie einem Sitzteil, dass mit seiner Sitzrahmenstruktur über schwenkbare Ständerbeine auf einer Bodenstruktur aufständerbar ist.

### Darstellung der Erfindung

Es kann als eine Aufgabe der Erfindung angesehen werden, eine Vorrichtung zur schnellen und flexiblen Neukonfiguration einer Flugzeugbestuhlung anzugeben.

Es sind ein Flugzeug mit einem Kabinenbereich mit mehreren Sitzeinheiten gemäß Anspruch 1 und ein Verfahren zum Verändern von Sitzabständen einer Bestuhlung in einem Flugzeug gemäß Anspruch 10 angegeben.

Die beschriebenen Ausführungsbeispiele betreffen gleichermaßen das Flugzeug mit einer Befestigungseinheit und das Verfahren.

Gemäß der Erfindung ist ein Flugzeug mit einer beweglichen Befestigungseinheit für ein Sitzgestell in dem Flugzeug angegeben, wobei die Befestigungseinheit ein Verbindungselement aufweist, wobei das Verbindungselement eine erste Lagerung aufweist, mit der es beweglich gelagert an dem Sitzgestell anbringbar ist. Dabei weist das Verbindungselement eine zweite Lagerung auf, mit der es beweglich gelagert an eine Fußbodenfixierung anbringbar ist. Weiterhin wirken beide Lagerungen derart zusammen, dass eine Bewegung des Sitzgestells relativ zu der Fußbodenfixierung ermöglicht wird. Eine erste, vordere und eine zweite bewegliche Befestigungseinheit sind hintereinander angeordnet. Die beiden Befestigungseinheiten sind dazu ausgeführt, dass die Sitzabstände und die Bestuhlung durch das Besatzungspersonal geändert werden können.

Dabei kann das Verbindungselement beispielsweise eine Strebe sein, die an einem ihrer beiden Enden am Sitzgestell oder an einem Teil der Fußbodenstruktur bzw. an Fixierungselementen der Fußbodenstruktur gelagert sein kann. Dabei sind jegliche Lager im Sinne der technischen Mechanik möglich. Es kann anstatt der Strebe auch jegliches andere mechanische Element als Verbindungselement dienen, wenn es derart in Form und Material ausgestaltet ist, dass es zumindest die Gravitationskraft des Stuhles und des sich darauf befindlichen Passagiers problemlos, das heisst ohne Verschleiß und Ermüdung aufzuweisen, in die Bodenstruktur einleiten kann.

Idealerweise ist die bewegliche Befestigungseinheit auch in der Lage, Lasten, die bei einem Crash auftreten weiterzuleiten und gegebenenfalls aufzufangen.

Dabei ermöglicht die bewegliche Befestigungseinheit gemäß diesem Ausführungsbeispiel der vorliegenden Erfindung eine derart schnelle, technisch unkomplizierte und mit wenig Montageaufwand verbundene Möglichkeit die Bestuhlung des Flugzeuges zu ändern, dass durch das Besatzungspersonal die Sitzabstände spontan verändert werden können. Damit kann zum Beispiel direkt am Flugsteig (Gate) variabel auf das Passagieraufkommen reagiert werden.

Dabei haben die betroffenen Sitze ein Sitzgestell, welches eine variable Positionierung des Sitzes in mehreren Positionen in beliebiger Flugzeugrichtung ermöglicht, ohne den Sitz an sich vom Sitzgestell lösen zu müssen. Dadurch wird eine schnelle Veränderung des Sitzabstandes ermöglicht und die Fußbodenfixierung (Support) bleibt auf der Sitzschiene festgeschraubt. Weiterhin kann dem Business Class Passagier ein deutlich besserer Sitzkomfort geboten werden als bisher üblich.

Dadurch ist es möglich, dass beispielsweise die Kosten für die Neukonfiguration der Bestuhlung in einem Flugzeug gesenkt werden.

Somit kann das Sitzgestell durch die Bewegung der Befestigungseinheit beispielsweise verschiedene Sitzabstände (Seat Pitches) einnehmen. Dadurch kann mehr oder weniger Komfort, Platz, Stauraum und Beinfreiheit für die Passagiere zur Verfügung gestellt werden.

Dabei ist weiterhin möglich, dass auch Sitzwinkel mittels eines Ausführungsbeispiels der Befestigungseinheit verändert und dahingehend optimiert werden können, dass der Komfort des Passagiers, der sich auf dem Sitz befindet und / oder der darum befindlichen Passagiere gesteigert wird.

Dabei ist es in diesem und jedem anderen Ausführungsbeispiel der Erfindung möglich, dass die Bewegung des Sitzgestells durch die bewegliche Befestigungseinheit, solange nicht anders bestimmt, in allen drei Raumrichtungen ermöglicht wird. In Flugzeuglängsrichtung (x-Richtung) kann der technische Effekt der Erfindung genutzt werden, um die Abstände von hintereinander liegenden Sitzen zu optimieren. Ebenso kann gewünscht sein, dass laterale Sitzabstände in einfacher und flexibler Weise vergrößert oder verkleinert werden können. Dies würde eine Positionsänderung entlang der Flugzeugquerachse (y-Richtung) bedeuten. Aber auch eine Höhenverstellung des Sitzes in der senkrecht zum Flugzeugboden zeigenden Richtung (z-Richtung) ist gemäß einem Ausführungsbeispiel der Erfindung möglich.

Mit anderen Worten ist also eine schnelle und unkomplizierte Verstellung eines Sitzgestells bzw. eines Sitzes möglich, ohne die Befestigung auf der Sitzschiene lösen zu müssen. Dabei ist eine schnelle Rekonfiguration der Sitzabstände möglich, um auf eine unterschiedliche Auslastung der verschiedenen Klassen des Flugzeuges und unterschiedliche Gesamtpassagierzahlen reagieren zu können.

Es ist weiterhin möglich, dass dieses Ausführungsbeispiel der Erfindung mit einem Gelenk kombiniert wird, welches den Flugzeugsitz um die eigene, vertikale Achse drehen lässt. Diese Kombination kann zum Beispiel ermöglichen, dass ein ursprünglich in Flugzeuglängsrichtung (x-Richtung) ausgerichteter Stuhl um beispielsweise 90° gedreht wird. Ausgehend von dieser Position ist nun durch Betätigung der Befestigungseinheit der Abstand des Stuhls zur Fensterseite des Flugzeuges bzw. zu seinen Nachbarstühlen variabel einstellbar.

Weiterhin wird die Bewegung des Sitzgestells durch die bewegliche Befestigungseinheit ermöglicht, ohne die Fußbodenfixierung von dem Fußboden zu lösen.

Gemäß der Erfindung erfolgt die Bewegung des Sitzgestells relativ zu der Fußbodenfixierung von einer ersten Sitzposition zu einer zweiten Sitzposition, wobei es sich bei beiden Sitzpositionen um stabile Sitzpositionen handelt, aus denen sich das Sitzgestell nur durch die Aufwendung einer externen Kraft bringen lässt.

Somit ist lediglich eine einfache mechanische Sicherung der Befestigungseinheit in einer der beiden Positionen erforderlich.

Es können Materialien verwendet werden, die ein großes Verhältnis zwischen mechanischer Steifigkeit und spezifischem Gewicht aufweisen. Neben herkömmlichen Metallen, können hier beispielsweise Aluminium, Titan, Honeycomb Materialien, Faserverbundwerkstoffe oder Carbon verwendet werden.

Gemäß einem weiteren Ausführungsbeispiel der vorliegenden Erfindung erfolgt die Bewegung des Sitzgestells ohne ein Lösen der Fußbodenfixierung vom Fußboden.

Damit kann vermieden werden, dass die komplette Sitzeinheit durch Lösen und Entsichern der Fußbodenfixierung und beispielsweise anschließendem Verrutschen des Sitzes auf der Sitzschiene oder durch sogar komplettes Herausnehmen des Sitzes nur mit erheblichem Werkzeug- und Kraftaufwand in ihrer Position verändert werden kann. Dies erlaubt es dem üblichen Kabinenpersonal, eine Neukonfiguration selbst durchzuführen. Dabei können Installationskosten eingespart und die Flexibilität erhöht werden.

Gemäß einem weiteren Ausführungsbeispiel der vorliegenden Erfindung ist zumindest eine Lagerung der Befestigungseinheit als drehend gelagert ausgeführt.

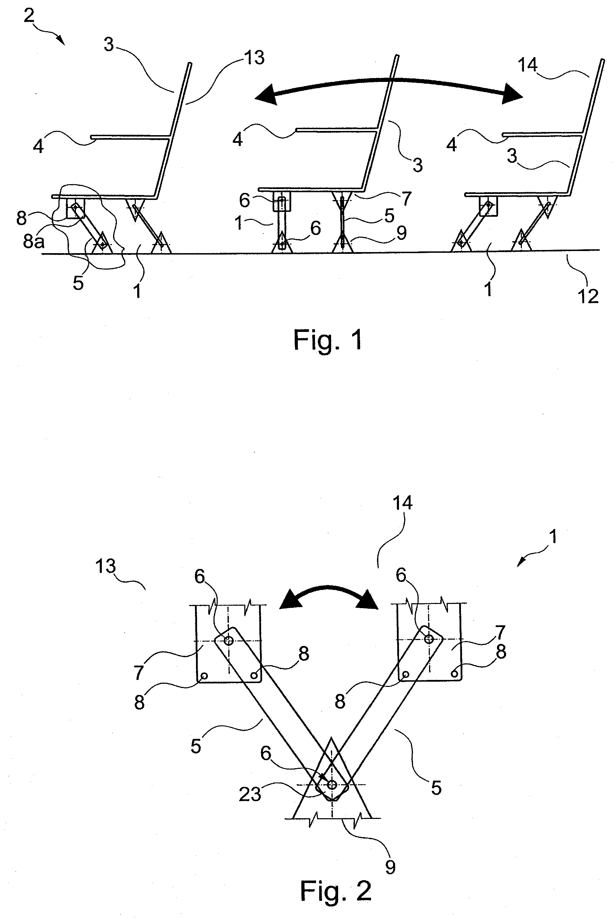

Wie beispielsweise in den Figuren 1 bis 3 gezeigt, ermöglicht solch eine drehende Lagerung eine einfache, reibungsfreie Bewegung der Sitze in die gewünschte Richtung, ohne dass hierfür ein hoher Kraftaufwand erforderlich wäre.

Dabei sind andere Lagerungen und Vorrichtungen wie Gelenke möglich, die eine Variation der Koordinaten des Sitzgestells mittels der Befestigungseinheit erlauben. So kann neben einer drehend gelagerten Variante beispielsweise ein Kugelgelenk, ein Scharniergelenk, ein Ellipsoid oder Eigelenk, ein Sattelgelenk, ein Zapfengelenk oder auch ein ebenes Gelenk für die Lagerung an der Fußbodenfixierung und / oder für die Lagerung an dem Sitzgestell verwendet werden.

Gemäß der vorliegenden Erfindung weist die vordere Befestigungseinheit einen Mechanismus zur Arretierung im Bereich einer der Lagerungen auf, wobei der Mechanismus einen geöffneten und einen arretierten Zustand aufweist und wobei der geöffnete Zustand eine Bewegung des Verbindungselements um die jeweilige Lagerung ermöglicht. Weiterhin verhindert der arretierte Zustand eine Bewegung des Verbindungselements um die jeweilige Lagerung.

Dabei kann die Befestigungseinheit auch mehrere Mechanismen zur Arretierung aufweisen, wobei die Mechanismen nicht zwingend miteinander in Wechselwirkung stehen müssen.

Aufgrund dieses Mechanismus der Befestigungseinheit gemäß diesem Ausführungsbeispiel der Erfindung lässt sich somit das Sitzgestell in eine stabile Position bringen, aus der sich das Sitzgestell unter Einwirkung üblicher Kräfte nicht mehr bewegen kann. Dabei kann der Mechanismus einfach und spartanisch ausgeführt sein, um eine schnelle und flexible Veränderung der Sitzposition des Sitzgestells herbeiführen zu können. Dies kann beispielsweise durch das Kabinenpersonal am Gate geschehen.

Dabei kann der Mechanismus rein mechanischer Natur sein. Aber auch eine elektrische Verriegelung einer Mechanik, oder auch eine Arretierung mittels magnetischer Kräfte und jede Kombination aus diesen Varianten ist damit möglich.

Es kann bei Anwendung in einem Flugzeug weiterhin ein Verschlusselement enthalten sein, welches die missbräuchliche Lösung des Arretierungsmechanismus durch Unbefugte, wie zum Beispiel Passagiere verhindert. Der Mechanismus beispielsweise durch das Verschlusselement für Unbefugte unzugänglich gemacht werden. Ein Verschluss des Mechanismus ist somit möglich.

Gemäß der vorliegenden Erfindung weist das Sitzgestell in Verbindung mit dem Verbindungselement den Mechanismus zur Arretierung auf.

Dies ist beispielsweise in Fig. 2 deutlich dargestellt, wobei der Arretierungsmechanismus hier durch eine Bohrung 8 und einen Bolzen (hier nicht gezeigt) zur Arretierung realisiert ist. Dabei ist in Fig. 2 die Erfindung gezeigt, in welcher der Mechanismus zur Arretierung an dem Element des Sitzgestells 7 und dem Verbindungselement 5 gezeigt ist. Dabei korrespondieren die beiden Bohrungen 8 mit zwei beispielhaften, unterschiedlichen Sitzpositionen des Sitzes.

Gemäß der vorliegenden Erfindung weist der Mechanismus zur Arretierung eine Bohrung in Verbindung mit einem Verriegelungsbolzen auf.

Dabei ist die Bohrung an dem Verbindungselement und dem Element des Sitzgestells bzw. der Sitzstruktur vorhanden. Durch Hereinschieben eines Bolzens in die vorgebohrte Struktur kann dabei eine weitere Bewegung des Sitzgestells mit der Befestigungseinheit auch bei zukünftiger Krafteinwirkung verhindert werden. Die Arretierung ist somit geschlossen und es ist eine stabile Sitzposition erreicht.

Gemäß einem weiteren Ausführungsbeispiel der vorliegenden Erfindung ermöglicht der Mechanismus eine Arretierung in zwei unterschiedlichen Positionen.

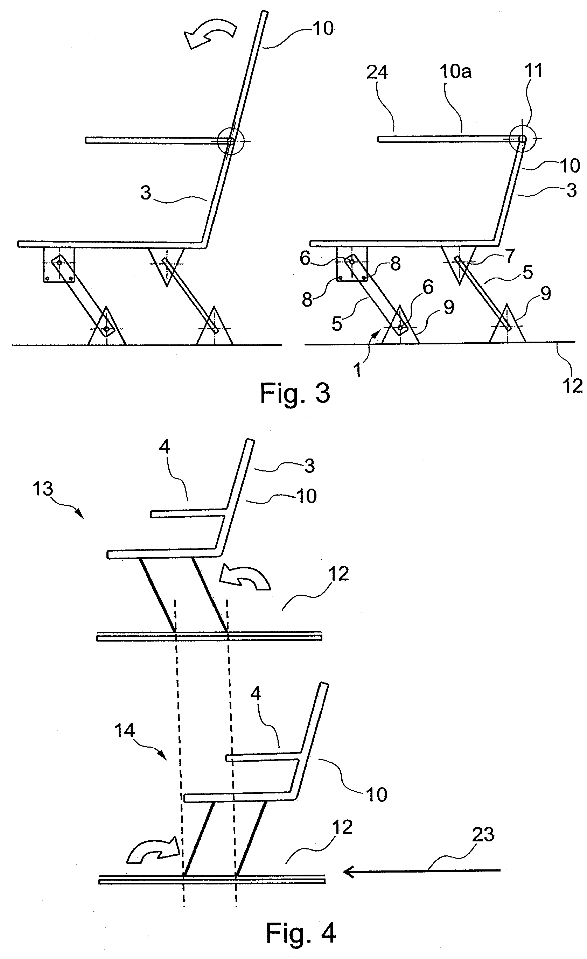

Diese beispielhafte Ausgestaltung der Erfindung kann deutlich in Fig. 2 und Fig. 4 gesehen werden. Dabei kann beispielsweise die vordere Sitzposition bzw. vorgelehnte Sitzposition im oberen Teil der Fig. 4 mit dem linken Teil der Fig. 2 in Verbindung gebracht werden, in welcher die Arretierung des Verbindungselements durch Einschieben eines Bolzens in eine Bohrung des Teiles der Sitzstruktur 6 erfolgt.

Gemäß einem weiteren Ausführungsbeispiel der vorliegenden Erfindung ermöglicht die Befestigungseinheit mittels der Bewegung um die Lagerung eine Positionierung des Sitzgestells entlang einer vorgegebenen Achse.

Dies kann in einem Flugzeug beispielsweise die x-, y- oder z-Achse sein. Um die Sitzabstände in Längsrichtung des Flugzeugs optimieren und anpassen zu können, kann die Bewegung dieses Ausführungsbeispiels der Befestigungseinheit entlang der x-Achse erfolgen. Aber auch eine laterale Optimierung der Sitzabstände in y-Richtung ist damit nicht ausgeschlossen. Ebenso kann eine gewünschte Höhenverstellung des Sitzes in z-Richtung damit realisiert werden.

Gemäß einem weiteren Ausführungsbeispiel der vorliegenden Erfindung ist die Befestigungseinheit zum stufenlosen Positionieren des Sitzgestells ausgeführt.

Im Gegensatz zu der Variante, in welcher zwei konkrete Sitzpositionen angesteuert werden können, ist auch eine Ausgestaltung des Ausführungsbeispiels der Erfindung möglich, bei der eine stufenlose Positionierung des Sitzes von einer Ausgangsposition ausgehend in alle drei Raumrichtungen x, y, und z möglich ist.

Dabei kann der vorher beschriebene Arretierungsmechanismus genauso auf eine stufenlos arretierbare Positioniereinheit bzw. stufenlos arretierbare Befestigungseinheit angewendet und in diese integriert werden.

Gemäß einem weiteren Ausführungsbeispiel der vorliegenden Erfindung weist die Befestigungseinheit weiterhin die Fußbodenfixierung und eine Fixierungseinheit auf, wobei die Fixierungseinheit ein Teil des Sitzgestells des Flugzeuges ist und wobei das Verbindungselement durch die Fixierungseinheit an dem Sitzgestell anbringbar ist.

Damit wird eine mechanische Einheit beschrieben, die beispielsweise durch Fig. 2 dargestellt ist, und die als komplette Einheit sowohl an die darunter befindliche Fußbodenstruktur als auch an die darüber befindliche Sitzstruktur anbringbar ist. Damit kann gewährleistet werden, dass durch die mechanische Einheit, jedes Element genannt und enthalten ist, welches zur Ausführung einer schnellen Verstellung der Sitzabstände in beliebiger Richtung innerhalb eines Flugzeuges nötig ist, ohne die Befestigung auf einer Sitzschienenkonstruktion zu lösen.

Dabei ist mit Sitz zum Beispiel ein econmy class Sitz, ein business class Sitz, ein first class Sitz, ein Sitz für die Cockpitbesatzung, ein Sitz für die Kabinenbesatzung oder auch ein TTL- Sitz (Taxi-Takeoff-Landing-Sitz) gemeint.

Die Sitzeinheit stellt eine Einheit dar, welche als ganze auf eine vorgegebene, beliebige Flugzeugbodenstruktur fixiert werden kann. Nach der Fixierung dieser mechanischen Sitzeinheit kann zu beliebigem Zeitpunkt mit sehr geringem mechanischen Aufwand beispielsweise durch das Kabinenpersonal die Position des Sitzes relativ zu seiner Umgebung im Flugzeug durch Betätigen des Bewegungsmechanismus erreicht werden. Dabei ist der Bewegungsmechanismus durch die Befestigungseinheit realisiert.

Gemäß einem weiteren Ausführungsbeispiel der vorliegenden Erfindung ist ein Flugzeug mit einer Sitzeinheit angegeben, wobei der Flugzeugsitz eine klappbare Rückenlehne aufweist, und wobei der Flugzeugsitz durch Klappen der Rückenlehne in einen Tisch oder in eine Ablageeinheit für einen dahinter sitzenden Passagier umwandelbar ist.

Diese beispielhafte Ausgestaltung der Erfindung ist beispielsweise in Fig. 3 dargestellt. Es kann also ein Teil der Sitzlehne umgeklappt und zu einer Tischplatte bzw. zu einer multifunktionalen Ablage umfunktioniert werden. Dies kann den Komfort der sich darum befindlichen Passagiere weiter steigern.

Gemäß einem weiteren Ausführungsbeispiel der vorliegenden Erfindung ist ein Verfahren zum Verändern von Sitzabständen einer Bestuhlung in einem Flugzeug durch eine bewegliche Befestigungseinheit gemäß einem Ausführungsbeispiel der Erfindung angegeben. Das Verfahren weist dabei den folgenden Schritt auf:
Bewegen eines Sitzes, ohne dass der Sitz von eine Fixierung an einem Fußboden gelöst wird; wobei die Bewegung den gesamten Sitz entlang einer vorgegebenen Richtung positioniert.
Das Bewegen des Sitzes ist dabei zum Beispiel in den Figuren 1, 2, 4 und 5 durch den Pfeil angedeutet und kann zum Beispiel entlang der X-Achse im Flugzeug erfolgen.

Gemäß einem weiteren Ausführungsbeispiel der vorliegenden Erfindung wird durch das Bewegen der Abstand des Sitzes zu umliegenden Sitzen verändert.

Gemäß einem weiteren Ausführungsbeispiel der vorliegenden Erfindung weist das Verfahren weiterhin die Schritte: Lösen einer Arretierung der beweglichen Befestigungseinheit und Schließen einer Arretierung der beweglichen Befestigungseinheit auf.

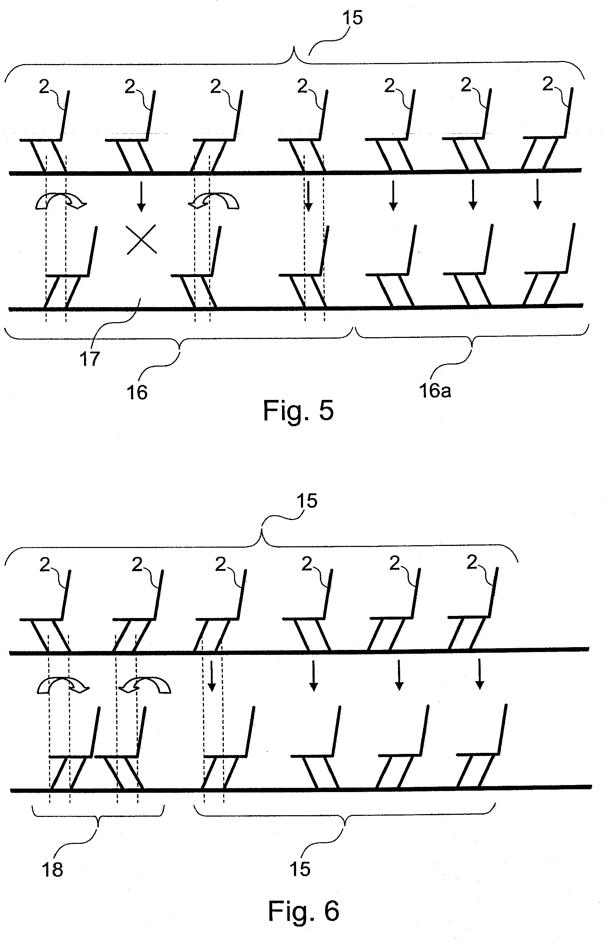

Weiterhin können innerhalb des Verfahrens Schritte ausgeführt werden, die Sitze aus der aktuellen Bestuhlung entfernen oder auch hinzufügen. So ist beispielsweise in den Figuren 5 und 6 ein Rekonfiguration der Sitze beschrieben, die mittels des Verfahren erreicht und durchgeführt werden kann. Dabei können Komforterhöhungen für die Passagiere erreicht werden.

Weitere Ausführungsbeispiele und Vorteile der Erfindung ergeben sich aus der folgenden Figurenbeschreibung. Die Erfindung beschränkt sich aber nicht auf diese Ausführungsbeispiele.

Die Darstellungen in den Figuren sind schematisch und nicht maßstäblich.

### Kurze Beschreibung der Figuren

Fig. 1 zeigt eine schematische, zweidimensionale Darstellung einer beweglichen Befestigungseinheit gemäß einem Ausführungsbeispiel der vorliegenden Erfindung.
Fig. 2 zeigt eine schematische, zweidimensionale Darstellung der beweglichen Befestigungseinheit gemäß einem weiteren Ausführungsbeispiel der vorliegenden Erfindung.
Fig. 3 zeigt eine schematische, zweidimensionale Darstellung einer beweglichen Befestigungseinheit mit einem Flugzeugsitz gemäß einem weiteren Ausführungsbeispiel der vorliegenden Erfindung.
Fig. 4 zeigt eine schematische, zweidimensionale Darstellung von zwei Sitzpositionen eines Flugzeugsitzes gemäß einem weiteren Ausführungsbeispiel der vorliegenden Erfindung.
Fig. 5 zeigt eine schematische, zweidimensionale Darstellung einer Flugzeugbestuhlung, die gemäß einem weiteren Ausführungsbeispiel der vorliegenden Erfindung verändert werden kann.
Fig. 6: zeigt eine schematische, zweidimensionale Darstellung einer Flugzeugbestuhlung, die gemäß einem weiteren Ausführungsbeispiel der vorliegenden Erfindung verändert werden kann.
Fig. 7 zeigt ein Flugzeug mit beweglichen Befestigungseinheiten gemäß einem weiteren Ausführungsbeispiel der vorliegenden Erfindung.

### Detaillierte Beschreibung von Ausführungsbeispielen

Im Folgenden werden mit Verweis auf die Figuren bevorzugte Ausführungsbeispiele der vorliegenden Erfindung beschrieben.

In der folgenden Figurenbeschreibung werden für die gleichen oder ähnlichen Elemente die gleichen Bezugsziffern verwendet.

Fig. 1 zeigt einen Sitz mit einer beweglichen Befestigungseinheit 2 in drei verschiedenen Positionen. Dabei ist ein Sitz 3 mit Armlehnen 4 zu erkennen, der auf der beweglichen Befestigungseinheit 1 angebracht ist. Es ist zu erkennen, dass in der vorliegenden Erfindung der Sitz 2 bewegliche Befestigungseinheiten aufweist, die hintereinander angeordnet sind. Dabei ist im linken Teil der Fig. 1 eine erste, nach vorne geneigte Position 13 des Sitzes dargestellt, die mittlere Zeichnung entspricht einer aufrechten Position, die rechte Zeichnung entspricht einer zweiten, zurückgelehnten Position 14. Dabei ist der Sitz mit der beweglichen Befestigungseinheit am Fußboden 12 beispielsweise in einem Flugzeug fixiert.

Mittels der Lagerungen 6, die sowohl an den Teilen der Sitzstruktur 7 als auch an der Fußbodenfixierung 9 angebracht sind, kann das Verbindungselement 5 beweglich um diese herum angebracht werden. Dadurch ist eine Bewegung in Pfeilrichtung möglich. Weiterhin ist zu sehen, dass zwei verschiedene Varianten der beweglichen Befestigungseinheit 1 verwendet werden können. Die im vorderen Teil des Sitzes angebrachte bewegliche Befestigungseinheit hat einen Arretierungsmechanismus mit einer Bohrung 8, die einer entsprechenden Bohrung 8a in dem Verbindungselement 5 bei Erreichen der zu arretierenden Position gegenübersteht. Dadurch kann durch Einschieben eines Bolzens durch die Bohrungen 8 und 8a eine Arretierung des Mechanismus erreicht werden. Dadurch kann der Sitz beispielsweise in der links dargestellten Position 13 arretiert und dort stabil gehalten werden. Es ist somit kein Lösen des Sitzes vom Boden notwendig, um in die gewünschte, geänderte Position zu kommen. Dabei kann die neue Position mehr Komfort für die Passagiere bieten.

Zur Erzeugung von mehr Stauraum oder zur Realisierung von größeren Sitzabständen kann der Sitz mit der beweglichen Befestigungseinheit 2 in die Position 14 gebracht werden. Dafür wird die Arretierung gelöst und mittels einer externen Kraft wird die Position 14 des Sitzes erreicht. Dies kann ohne bisher erforderlichen, großen Montageaufwand, hohe Kosten und langen Planungszeitraum durchgeführt werden.

Fig. 2 zeigt eine bewegliche Befestigungseinheit gemäß einem weiteren Ausführungsbeispiel der vorliegenden Erfindung. Dabei sind zwei Positionen 13 und 14 des Verbindungselements 5 und den daran angebrachten Teil der Sitzstruktur 7 gezeigt. Weiterhin ist die Fußbodenfixierung 9 zu erkennen, mit der die Kräfte aus dem Sitz in die Primärstruktur des Flugzeugs eingeleitet werden. Um das Verbindungselement, um das Lager 6 schwenken zu können, muss vorher die Arretierung, die hier beispielhaft durch die Bohrungen 8 in Verbindung mit einem Bolzen ausgeführt ist, gelöst werden. Der Pfeil zeigt dabei die kontinuierliche Bewegung des Verbindungselements entlang einer Kreisbahn hin zur neuen Position 13 oder 14 an.

Die Fußbodenbefestigung kann dabei beispielsweise an einer Sitzschiene im Flugzeug fest installiert sein.

Fig. 3 zeigt ein Ausführungsbeispiel der vorliegenden Erfindung, bei der ein normaler Sitz 3 in eine multifunktionale Ablage 22 umfunktioniert wird. Dabei wird die Rückenlehne 10, welche durch ein Gelenk beweglich gelagert ist, in einen Zustand 10a umgeklappt. Weiterhin ist der Sitz 3 mit zwei beweglichen Befestigungseinheiten 1 versehen, die über mehrere Lager und Gelenke 6 eine Positionierung des Sitzes entlang der durch die Lagerung ermöglichten Bewegungsrichtung erreichen. Eine Kombination aus dieser möglichen Bewegung der Rückenlehne und einer Bewegung durch die Befestigungseinheit kann vorteilhaft genutzt werden, um Stauraum in einem Flugzeug zu schaffen. Dies ist beispielsweise in Fig. 6 zu sehen.

Fig. 4 zeigt zwei stabile Positionen 13 und 14 des Sitzes 3, wobei hier klar eine Verschiebung der Rückenlehne entlang der x-Achse 23 gezeigt ist. Dadurch kann mehr Stauraum und Komfort für davor oder dahinter sitzende Passagiere, sowie für den Benutzer des Sitzes selbst erreicht werden. Dieser Effekt wird durch die bewegliche Befestigungseinheit erzielt, ohne dass dabei der Sitz von der Bodenhalterung abmontiert werden muss.

Der dargestellte Mechanismus verdeutlicht dabei nur ein mögliches Funktionsprinzip. Das Konzept lässt sich mit verschiedenen Varianten ausführen. Das lässt sich beispielsweise in den Fign. 5 und 6 erkennen, in welchen verschiedene Bestuhlungssituationen mit der Befestigungseinheit hinsichtlich des Komfort der Passagiere optimiert werden.

Fig. 5 zeigt eine mögliche Bestuhlungssituation und deren Variationsmöglichkeit durch ein Ausführungsbeispiel der Befestigungseinheit in einem Flugzeug. Es ist eine erste Besetzungsvariante mit gleichem Sitzabstand 15 gezeigt, die mehrere Sitze mit beweglichen Befestigungseinheiten 2 aufweist. Nach einer möglichen Rekonfiguration mittels einer beweglichen Befestigungseinheit gemäß einem Ausführungsbeispiel der vorliegenden Erfindung kann diese Bestuhlungssituation in einen Zustand überführt werden, der in dem darunter liegenden Teilbild gezeigt ist. Dabei kann ein Sitz 17 herausgenommen worden sein. Weiterhin können die beiden Sitze jeweils vor bzw. nach dem entfernten Sitz 17 in ihren Positionen mittels einer beweglichen Befestigungseinheit gemäß einem Ausführungsbeispiel der Erfindung verändert werden. Dabei kann mit diesen wenigen mechanischen Eingriffen eine zweite Besetzungsvariante mit einem anderen Sitzabstand 16 realisiert werden, wobei eine dritte Besetzungsvariante 16a immer noch den gleichen Sitzabstand wie die Besetzungsvariante 15 aufweist. Es kann somit flexibel eine zweite Klasse in eine bestehende Bestuhlungssituation mit aufgenommen werden.

Somit kann beispielsweise am Gate spontan auf ein unerwartetes Passagieraufkommen in den verschiedenen Klassen reagiert werden. Aus einem Bereich mit gleichem Sitzabstand können mittels weniger Handgriffe und ohne großen Aufwand beispielsweise eine Business Class mit einer dahinter liegenden Economy Class geschaffen werden. Mit anderen Worten werden auf das Layout bezogene verschiedene Varianten der Bestuhlung realisiert.

Die Verstellung startet dabei in der ersten Sitzreihe, da dort traditionell die Business Class Passagiere sitzen und sich die Economy Class im hinteren Teil der Kabine befindet. Selbstverständlich sind andere Kombinationen möglich und die Verstellung ist auch nicht auf eine bestimmte Anzahl von Sitzreihen beschränkt. Es handelt sich hierbei um die Entfernung einer Sitzbank.

Die zu verstellenden Sitze sind grundsätzlich so angeordnet, dass der erste Sitz von vorne nach hinten geklappt wird und der zweite Sitz wird entfernt. Der dritte Sitz wird von hinten nach vorne geklappt, der vierte Sitz bleibt in Position. So werden aus vier Reihen Economy Class drei Reihen Business Class.

Fig. 6 zeigt eine weitere Variante einer Veränderung der Bestuhlungssituation, wobei hier mit einer verschobenen Sitzbank eine neues Volumen oder eine neue Fläche geschaffen wird, welche beispielsweise als Ablage, als Schuhfach, als Tisch oder als sonstigen Stauraum benutzbar ist. Es ist eine erste Besetzungsvariante 15 gezeigt, bei der ein äquidistanter Abstand zwischen den Sitzen mit beweglichen Befestigungseinheiten 2 vorliegt. Werden die von links gesehenen ersten beiden Sitze mittels der beweglichen Befestigungseinheit gemäß einem Ausführungsbeispiel der vorliegenden Erfindung in ihrer Position zusammengeführt und anschließend arretiert, so ergibt sich eine Sitzbank, die nicht mehr als so Passagier Sitz (Pax-Sitz) nutzbar ist. Aber eine andere Nutzung als Ablagetisch oder ein Umbau zu Stauraum ist möglich.

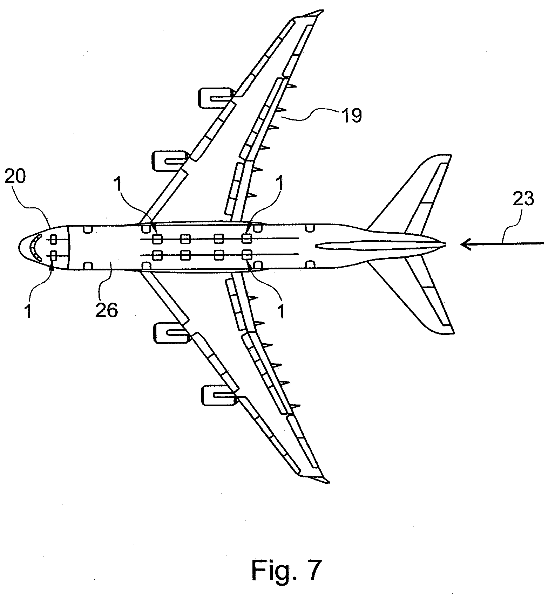

Gemäß der vorliegenden Erfindung zeigt Fig. 7 ein Flugzeug 19 mit mehreren beweglichen Befestigungseinheiten 1. Diese befinden sich im Kabinenbereich 24 und können sich auch im Cockpit-Bereich 20 befinden. Dabei dient das Konzept der beweglichen Befestigungseinheit dazu, den Sitzabstand variabel am Gate zu gestalten. Dabei haben die betroffenen Sitze ein Sitzgestell, welches eine Positionierung des Sitzkissens samt Lehne in mehreren Positionen in Flugzeuglängsrichtung 23 ermöglicht, ohne den Sitz an sich vom Sitzgestell zu lösen. Es kann somit auf ein variables Klassenaufkommen reagiert werden und dem Business Class Passagier wird ein deutlich besserer Sitzkomfort geboten als bisher üblich.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: bewegliche Befestigungseinheit
- 2: Sitz mit beweglicher Befestigungseinheit
- 3: Sitz
- 4: Armlehne
- 5: Verbindungselement
- 6: Lagerung
- 7: Teil der Sitzstruktur
- 8: Bohrung des Mechanismus zur Arretierung
- 8a: Bohrung in Verbindungselement
- 9: Fußbodenfixierung
- 10: Rückenlehne (klappbar)
- 10a: umgeklappte Rückenlehne
- 11: Gelenk
- 12: Fußboden des Flugzeuges
- 13: Sitzeinheit in Position A
- 14: Sitzeinheit in Position B
- 15: Besetzungsvariante 1 mit gleichem Sitzabstand
- 16: Besetzungsvariante 2 mit Sitzabstand X
- 16a: Besetzungsvariante 3 mit Sitzabstand Y
- 17: herausgenommener Sitz
- 18: Sitzbänke nutzbar als Ablage, Tisch
- 19: Flugzeug
- 20: Cockpit
- 21: Achse
- 22: multifunktionelle Ablage
- 23: x-Richtung
- 24: Kabinenbereich

## Patentansprüche

1. Flugzeug mit einem Kabinenbereich (24) mit mehreren Sitzeinheiten, die Sitzeinheiten aufweisend die folgenden Elemente:
einen Flugzeugsitz (3) mit einem Sitzgestell;
eine erste, vordere und eine zweite bewegliche Befestigungseinheit, die hintereinander angeordnet sind, **dadurch gekennzeichnet, dass** die beiden Befestigungseinheiten dazu ausgeführt sind, dass die Sitzabstände und die Bestuhlung durch das Besatzungspersonal geändert werden können;
wobei jede der zwei Befestigungseinheiten aufweist:
ein Verbindungselement (5);
wobei das Verbindungselement (5) eine erste Lagerung (6) aufweist, mit der es beweglich gelagert an dem Sitzgestell angebracht ist;
wobei das Verbindungselement (5) eine zweite Lagerung (6) aufweist, mit der es beweglich gelagert an einer Fußbodenfixierung (9) angebracht ist; wobei beide Lagerungen derart zusammenwirken, dass eine Bewegung des Sitzgestells relativ zu der Fußbodenfixierung ermöglicht ist;
wobei die Bewegung des Sitzgestells relativ zu der Fußbodenfixierung von einer ersten Sitzposition zu einer zweiten Sitzposition erfolgt;
wobei es sich bei beiden Sitzpositionen um stabile Sitzpositionen handelt, aus denen sich das Sitzgestell nur durch die Aufwendung einer externen Kraft bringen lässt;
wobei die Verbindungselemente (5) jeweils um eine Lagerung (6) schwenkbar sind;
wobei eine Befestigungseinheit einen Mechanismus zur Arretierung im Bereich einer der Lagerungen aufweist;
wobei der Mechanismus einen geöffneten und einen arretierten Zustand aufweist;
wobei der geöffnete Zustand eine Bewegung des Verbindungselements um die jeweilige Lagerung ermöglicht; und
wobei der arretierte Zustand eine Bewegung des Verbindungselements um die jeweilige Lagerung verhindert; **dadurch gekennzeichnet, dass**
die vordere Befestigungseinheit den Mechanismus zur Arretierung im Bereich einer der Lagerungen aufweist;
der Mechanismus zur Arretierung eine Bohrung in Verbindung mit einem Verriegelungsbolzen aufweist; wobei
das Sitzgestell in Verbindung mit dem Verbindungselement den Mechanismus zur Arretierung aufweist.

2. Flugzeug gemäß Anspruch 1,
wobei die Bewegung des Sitzgestells ohne ein Lösen der Fußbodenfixierung vom Fußboden erfolgt.

3. Flugzeug gemäß einem der Ansprüche 1 oder 2,
wobei zumindest eine der Lagerungen (6) als drehend gelagert ausgeführt ist.

4. Flugzeug gemäß einem der vorhergehenden Ansprüche,
wobei der Mechanismus eine Arretierung in zwei unterschiedlichen Positionen ermöglicht.

5. Flugzeug gemäß einem der vorhergehenden Ansprüche,
wobei die Befestigungseinheit mittels der Bewegung um die Lagerung (6) eine Positionierung des Sitzgestells entlang einer vorgegebenen Achse ermöglicht.

6. Flugzeug gemäß einem der vorhergehenden Ansprüche,
ausgeführt zum stufenlosen Positionieren des Sitzgestells.

7. Flugzeug gemäß einem der vorhergehenden Ansprüche, die Befestigungseinheit weiterhin aufweisend:
die Fußbodenfixierung (9);
eine Fixierungseinheit;
wobei die Fixierungseinheit ein Teil des Sitzgestells des Flugzeuges ist;
und wobei das Verbindungselement durch die Fixierungseinheit an dem Sitzgestell anbringbar ist.

8. Flugzeug gemäß einem der vorhergehenden Ansprüche,
wobei der Flugzeugsitz eine klappbare Rückenlehne (10) aufweist;
wobei der Flugzeugsitz durch Klappen der Rückenlehne (10) in einen Tisch oder in eine Ablageeinheit für einen dahinter sitzenden Passagier umwandelbar ist.

9. Flugzeug (19) gemäß einem der Ansprüche 1 bis 8,
wobei durch ein Bewegen von einer ersten Sitzposition in eine zweite Sitzposition der Sitzeinheit eine Veränderung eines Sitzabstands ermöglicht ist.

10. Verfahren zum Verändern von Sitzabständen einer Bestuhlung in einem Flugzeug (19)gemäß einem der Ansprüche 1 bis 8, das Verfahren aufweisend die folgenden Schritte:
Klappen eines ersten Sitzes von vorne nach hinten, ohne dass der erste Sitz von einer Fixierung an einem Fußboden gelöst wird;
wobei das Bewegen den gesamten ersten Sitz entlang einer vorgegebenen Richtung positioniert;
Entfernen eines zweiten Sitzes;
Klappen eines dritten Sitzes von hinten nach vorne, so dass aus vier Reihen "Economy Class" drei Reihen "Business Class" entstehen.

11. Verfahren gemäß Anspruch 10;
wobei durch das Bewegen der Abstand des ersten Sitzes zu umliegenden Sitzen verändert wird.

12. Verfahren gemäß einem der Ansprüche 10 und 11, weiterhin aufweisend die Schritte:
Lösen einer Arretierung der beweglichen Befestigungseinheit; und
Schließen einer Arretierung der beweglichen Befestigungseinheit.

## Claims

1. Aircraft having a cabin area (24) having multiple seat units, the seat units comprising the following elements:
an aircraft seat (3) having a seat frame;
a first, front fastening unit and a second movable fastening unit that are arranged one behind each other, **characterized in that** the two fastening units are configured such that the seat spacings and the seating arrangement can be changed by the crew;
wherein each of the two fastening units comprises:
a connecting element (5);
wherein the connecting element (5) comprises a first bearing (6) by which said connecting element is mounted to the seat frame in a movably supported manner;
wherein the connecting element (5) comprises a second bearing (6) by which said connecting element is mounted to a fixing arrangement (9) in the floor in a movably supported manner;
wherein the two bearing cooperate with one another such that it is possible for the seat frame to move relative to the fixing arrangement in the floor;
wherein the relative movement of the seat frame to the fixing arrangement in the floor occurs from a first seat position to a second seat position;
wherein the two seat positions are stable seat positions and the seat frame can only be moved out of said stable positions by applying an external force;
wherein the connecting elements (5) are each pivotable about a bearing (6);
wherein a fastening unit comprises a mechanism for locking in a region of one of the bearing;
wherein the mechanism comprises an open state and a locked state;
wherein the open state renders possible for the connecting element to move about the respective bearing; and
wherein the locked state prevents the connecting element from moving about the respective bearing, **characterized in that**:
the front fastening unit comprises the mechanism for locking in region of one of the bearing;
the mechanism for locking comprises a bore hole in conjunction with a locking bolt;
wherein the seat frame comprises in conjunction with the connecting element the mechanism for locking.

2. Aircraft according to claim 1,
wherein the movement of the seat frame takes place without detaching the fixing arrangement in the floor from the floor.

3. Aircraft according to claim 1 or 2,
wherein at least one of the bearing (6) is embodied as rotatably mounted.

4. Aircraft according to one of the preceding claims,
wherein the mechanism provides a locking arrangement in two different positions.

5. Aircraft according to one of the preceding claims,
wherein by the moving about the bearing (6)the fastening unit provides to a positioning of the seat frame along a predetermined axis.

6. Aircraft according to one of the preceding claims, embodied in such a manner that the seat frame can be positioned in an infinitely variable manner.

7. Aircraft according to one of the preceding claims, the fastening unit comprising furthermore:
the fixing arrangement (9) in the floor;
a fixing unit;
wherein the fixing unit is part of the seat frame of the aircraft; and
wherein the connecting element can be attached to the seat frame by the fixing unit.

8. Aircraft according to one of the preceding claims,
wherein the aircraft seat comprises a foldable seat back (10);
wherein the aircraft seat can be converted by folding the seat back (10) into a table or into a tray for a passenger seated to the rear of said seat.

9. Aircraft (19) according to one of claims 1 to 8,
wherein it is possible to vary a seat spacing by moving the seat unit from a first seat position to a second seat position.

10. Method for varying seat spacings of a seat arrangement in an aircraft (19) according to one of claims 1 to 8, the method comprising the following steps:
folding a first seat from front to rear without detaching the first seat from a fixing arrangement in a floor;
wherein the moving positions the entire first seat along a predetermined direction;
removing a second seat;
folding a third seat from rear to front so that three rows of "Business Class" are created out of four rows of "Economy Class".

11. Method according to claim 10;
wherein the spacing of the first seat with respect to surrounding seats is varied by means of moving the seat unit.

12. Method according to one of claims 10 and 11, further comprising the steps:
releasing a locking arrangement of the movable fastening unit; and
closing a locking arrangement of the movable fastening unit.

## Revendications

1. Aéronef doté d'un domaine cabine (24) comprenant plusieurs ensembles siège, les ensembles siège comportant les éléments suivants :
un siège d'aéronef (3) comportant un châssis de siège ;
un premier ensemble de fixation mobile avant et un second ensemble de fixation mobile, qui sont disposés l'un derrière l'autre, **caractérisé en ce que** les deux ensembles de fixation sont conçus pour que les espaces entre les sièges et la configuration des sièges puissent être modifiés par le personnel de bord ;
chacun des deux ensembles de fixation présentant :
un élément de liaison (5) ;
l'élément de liaison (5) présentant un premier support (6), au moyen duquel il est monté de manière mobile sur le châssis de siège ;
l'élément de liaison (5) présentant un second support (6), au moyen duquel il est monté de manière mobile sur un élément de fixation au sol (9) ;
les deux supports coopérant de telle manière qu'un mouvement du châssis de siège est possible par rapport à l'élément de fixation au sol ;
le mouvement du châssis de siège par rapport à l'élément de fixation au sol se faisant d'une première position de siège à une seconde position de siège ;
les deux positions de siège étant des positions de siège stables, le châssis de siège ne pouvant être amené à quitter ces positions que par l'action d'une force extérieure ;
les éléments de liaison (5) étant pivotants respectivement autour d'un support (6) ;
un ensemble de fixation présentant un mécanisme de blocage au niveau de l'un des supports ;
le mécanisme présentant un état ouvert et un état bloqué ;
l'état ouvert permettant un mouvement de l'élément de liaison autour du support respectif ; et
l'état bloqué empêchant un mouvement de l'élément de liaison autour du support respectif ; **caractérisé en ce que**
l'ensemble de fixation avant présente le mécanisme de blocage au niveau de l'un des supports ;
le mécanisme de blocage présente un alesage en liaison avec un boulon de verrouillage ;
le châssis de siège en liaison avec l'élément de liaison présentant le mécanisme de blocage.

2. Aéronef selon la revendication 1,
dans lequel le mouvement du châssis de siège se fait sans libérer du sol l'élément de fixation au sol.

3. Aéronef selon l'une des revendications 1 ou 2,
dans lequel au moins un des supports (6) est réalisé sous la forme d'un support monté rotatif.

4. Aéronef selon l'une des revendications précédentes,
dans lequel le mécanisme permet un blocage dans deux positions différentes.

5. Aéronef selon l'une des revendications précédentes,
dans lequel l'ensemble de fixation permet un positionnement du châssis de siège le long d'un axe prédéfini au moyen du mouvement autour du support (6).

6. Aéronef selon l'une des revendications précédentes,
conçu pour le positionnement sans palier du châssis de siège.

7. Aéronef selon l'une des revendications précédentes, l'ensemble de fixation présentant en outre :
l'élément de fixation au sol (9) ;
une unité de fixation ;
l'unité de fixation étant une partie du châssis de siège de l'aéronef ;
et l'élément de liaison pouvant être rapporté sur le châssis de siège par l'unité de fixation.

8. Aéronef selon l'une des revendications précédentes,
dans lequel le siège d'aéronef présente un dossier rabattable (10) ;
dans lequel le siège d'aéronef peut être transformé en une table ou un ensemble de rangement pour un passager assis derrière celui-ci en rabattant le dossier (10).

9. Aéronef (19) selon l'une des revendications 1 à 8,
dans lequel un mouvement de l'ensemble siège d'une première position de siège à une seconde position de siège permet une modification d'un espace entre les sièges.

10. Procédé de modification des espaces entre les sièges d'une configuration de sièges dans un aéronef (19) selon l'une des revendications 1 à 8, le procédé présentant les étapes suivantes consistant à :
rabattre un premier siège de l'avant vers l'arrière, sans que le premier siège ne soit libéré d'une fixation à un sol ;
le mouvement positionnant la totalité du premier siège le long d'une direction prédéfinie ;
retirer un second siège ;
rabattre un troisième siège de l'arrière vers l'avant, de manière à créer trois rangs de « classe affaires » à partir de quatre rangs de « classe économique ».

11. Procédé selon la revendication 10 ;
dans lequel le mouvement modifie l'espace entre le premier siège et des sièges autour de celui-ci.

12. Procédé selon l'une des revendications 10 et 11, présentant en outre les étapes consistant à :
libérer un blocage de l'ensemble de fixation mobile ; et
fermer un blocage de l'ensemble de fixation mobile.
